# EUROPÄISCHE PATENTSCHRIFT

(11) **EP 3 365 141 B1**
(45) Veröffentlichungstag und Bekanntmachung des Hinweises auf die Patenterteilung: **05.08.2020**
(21) Anmeldenummer: 16784792.0
(22) Anmeldetag: 20.10.2016
(51) Int. Cl.: B25J 9/16

(54) **MRK-SYSTEM UND VERFAHREN ZUM STEUERN EINES MRK-SYSTEMS**
MMI SYSTEM AND METHOD FOR CONTROLLING AN MMI SYSTEM
SYSTÈME DE COLLABORATION HOMME-ROBOT ET PROCÉDÉ DE COMMANDE D'UN SYSTÈME DE COLLABORATION HOMME-ROBOT

(30) Priorität: 21.10.2015 DE 102015220517
(43) Veröffentlichungstag der Anmeldung: 29.08.2018
(73) Patentinhaber: KUKA Systems GmbH, 86165 Augsburg (DE)
(72) Erfinder: GOERG, Patrick, 86565 Gachenbach-Sattelberg (DE)
(74) Vertreter: Tillmann, Axel
(86) Internationale Anmeldenummer: PCT/EP2016/001735
(87) Internationale Veröffentlichungsnummer: WO 2017/067661

(56) Entgegenhaltungen:
- EP-A1- 2 073 084
- WO-A1-2012/080130
- DE-A1-102013 113 044
- US-A1- 2011 295 399
- US-A1- 2013 266 205

## Beschreibung

Die Erfindung betrifft ein Mensch-Roboter-Kollaborations-System (MRK-System) sowie ein Verfahren zum Steuern eines MRK-Systems, wobei das MRK-System zumindest einen Manipulator mit einem Endeffektor umfasst, und wobei mittels des Verfahrens die dem Endeffektor bereitgestellte Energie erhöht werden kann, ohne einen Menschen zu gefährden.

Mensch-Roboter-Kollaborations-Systeme (MRK-Systeme) ermöglichen durch den Einsatz moderner Sicherheitstechnik die Kollaboration zwischen Menschen und Manipulatoren/Robotern.

Ein Manipulator eines MRK-Systems ist ein Gerät, welches die physikalische Interaktion mit der Umgebung ermöglicht. In MRK-Systemen kommen insbesondere Industrieroboter zum Einsatz, welche automatisch geführte mit drei oder mehr freiprogrammierbaren Bewegungsachsen ausgerüstete Mehrzweckmanipulatoren sind. Industrieroboter werden entweder ortsfest oder mobil in industriellen Anwendungen eingesetzt und führen z.B. Endeffektoren oder Werkstücke. Der Endeffektor ist dabei das letzte Glied der kinematischen Kette des Industrieroboters und kann beispielsweise ein Greifer sein.

In MRK-Systemen können z.B. die hohe Arbeitsleistung eines Manipulators mit den sensorischen Fähigkeiten eines Menschen kombiniert werden. Mögliche Anwendungen finden sich beispielsweise in der industriellen Fertigung, wie etwa in der Automobilfertigung. Typische Anwendungen sind Hebe- und Montagevorrichtungen, in denen ein Werkstück vom Manipulator angehoben und dann von einem Menschen positioniert wird. Neben den sich ergebenden Rationalisierungspotenzialen sind derartige Anwendungen vorteilhaft, da beispielsweise die Ergonomie eines Arbeitsplatzes und/oder die Ausdauer eines Menschen erhöht werden kann.

Dabei setzen MRK-Systeme voraus, dass der Mensch, welcher mit dem Manipulator kollaboriert, selbst nicht durch den Manipulator gefährdet wird. Insbesondere soll in MRK-Systemen eine Maschinensicherheit der Kategorie 3 gemäß ISO 13849 erzielt werden. In diesem Fall gilt ein MRK-System als sicher. Um eine Gefährdung des Menschen auszuschließen, werden oftmals die durch den Manipulator auf ein Werkstück aufgebrachten Kräfte soweit reduziert, dass keine Verletzungen bzw. keine ernsthaften Verletzungen eines Menschen auftreten können. Insbesondere wird die Greifkraft von Greifern soweit reduziert, dass ein Mensch nicht durch ein Greifen des Manipulators verletzt werden kann. Dadurch sind jedoch die Anwendungsbereiche stark eingeschränkt. Um dennoch hohe Kräfte auf ein Werkstück aufbringen zu können sind umfangreiche Sicherheitsmaßnahmen oder konstruktive Maßnahmen notwendig.

Konstruktive Maßnahmen, die z.B. das Quetschen oder Klemmen eines Menschen oder eines Körperteils verhindern sollen, schränken den Einsatzbereich eines Manipulators ebenfalls oft ein, da zusätzliche Sicherheits-Bauteile angebracht oder der Arbeitsbereich des Manipulators eingeschränkt wird. Sicherheitsmaßnahmen umfassen beispielsweise eine sichere Positions- und/oder Kraftregelung des Endeffektors, wodurch erheblicher Rechenaufwand erzeugt wird. Insbesondere wird oftmals zwischen positions- und kraftgeregeltem Betrieb umgeschaltet, wodurch sehr hohe regelungstechnische Anforderungen entstehen.

Aus der EP2 073 084 A1 ist ein Verfahren und eine Vorrichtung zur Steuerung eines Manipulators bekannt, wobei in einem Arbeitspunkt von dem Manipulator aufbringbare Kräfte reduziert werden, falls die Lage des Arbeitspunktes nicht in einem vorgegebenen Prozessbereich liegt.

Die Aufgabe der vorliegenden Erfindung ist es, die vorgenannten Nachteile zumindest teilweise auszuräumen und ein entsprechendes MRK-System sowie ein Verfahren zum Steuern eines MRK-Systems bereitzustellen.

Die Aufgabe wird gelöst durch ein Verfahren gemäß Anspruch 1 und ein MRK-System gemäß Anspruch 14.

Insbesondere wird die Aufgabe gelöst durch ein Verfahren zum Steuern eines Mensch-Roboter-Kollaborations-Systems (MRK-System), wobei das MRK-System zumindest einen Manipulator mit einem Endeffektor umfasst und wobei das Verfahren die Schritte des Einsetzens, im Sinne des Verwendens, des Endeffektors in einem ersten Betriebsmodus, wobei der Endeffektor im ersten Betriebsmodus mit reduzierter Leistung betrieben wird; des Überwachens, ob beim Einsetzen des Endeffektors im ersten Betriebsmodus ein gewünschtes Objekt manipuliert wird; und des Erhöhens der Leistung, mit der der Endeffektor betrieben wird, um den Endeffektor in einem zweiten Betriebsmodus einzusetzen, wenn die Überwachung ergeben hat, dass ein gewünschtes Objekt manipuliert wird, aufweist.

Im ersten Betriebsmodus wird der Endeffektor mit reduzierter Leistung betrieben, sodass eine verringerte Leistung zum Manipulieren und/oder Bearbeiten eines Objekts/Werkstücks zur Verfügung steht. Vorzugsweise wird dem Endeffektor stets ein konstanter Energiebetrag zur Verfügung gestellt. Dies kann beispielsweise eine Druckluftzufuhr oder ein elektrischer Strom sein. Ein Steuerelement, wie beispielsweise eine Drossel oder ein Stromregler, reduziert die zum Manipulieren und/oder Bearbeiten eines Objekts/Werkstücks zur Verfügung stehende Energie, sodass der Endeffektor mit reduzierter Leistung betrieben wird.

Die Leistung, mit der der Endeffektor im ersten Betriebsmodus betrieben wird, ist vorzugsweise so gewählt, dass eine Gefährdung eines Menschen ausgeschlossen ist. Beim Umschalten von dem ersten in einen zweiten Betriebsmodus, muss eine Gefährdung eines Menschen ausgeschlossen werden/sein, da das MRK-System im zweiten Betriebsmodus ohne Beschränkungen, beispielsweise der Greifkraft, betrieben werden soll. Dies ist möglich, da vor dem Umschalten in den zweiten, potentiell gefährdenden, Betriebsmodus eine Überwachung erfolgt, die erkennt, ob ein gewünschtes Objekt manipuliert wird, und so eine Gefährdung eines Menschen ausschließt. Die Gefährdung des Menschen kann ausgeschlossen werden, wenn die Überwachung ergibt, dass ausschließlich ein gewünschtes Objekt manipuliert wird. Das Manipulieren mittels des Endeffektors kann unter anderem ein Greifen, ein Bearbeiten, ein Vermessen und/oder ein Transportieren eines Objekts sein.

Der Endeffektor kann beispielsweise ein Greifer, ein Schrauber, ein Schweißwerkzeug oder ein anderes Werkzeug zum Bearbeiten, Transportieren, Vermessen und Greifen eines Objekts sein, wobei das Objekt vorzugsweise ein Werkstück ist. Im folgenden nichtbeschränkenden Beispiel sei der Endeffektor ein Greifer. Wird dieser Greifer in einem ersten Betriebszustand eingesetzt d.h. wird der Greifer mit reduzierter Leistung betrieben, so ist die Greifkraft des Greifers herabgesetzt, verglichen mit dem zweiten Betriebszustand, in welchem die Leistung des Greifers erhöht ist. Vorzugsweise wird die Leistung im ersten Betriebszustand derart reduziert, dass die resultierende Greifkraft keine Gefährdung eines Menschen bewirken kann. Analog kann für jede Art von Endeffektoren die Leistung in einem ersten Betriebszustand verringert werden. Beispielsweise führt die reduzierte Leistung bei einem Schrauber zu einer Begrenzung des Drehmoments und bei einem Schweißwerkzeug zur Begrenzung der Temperatur. Allgemein kann die reduzierte Leistung, mit der ein Endeffektor betrieben wird, bei unterschiedlichen Endeffektoren unterschiedliche Effekte hervorrufen. Diese können eine Begrenzung einer Kraft, eines Moments, einer Temperatur, einer Geschwindigkeit, einer Beschleunigung und/oder dergleichen sein. Vorzugsweise ist die reduzierte Leistung so gewählt, dass der Einsatz des Endeffektors im ersten Betriebszustand zu keiner Gefährdung eines Menschen führt. Die Überwachung, ob beim Einsetzen des Endeffektors ein Mensch gefährdet ist, stellt sicher, dass das System nachfolgend/später in einen zweiten Betriebsmodus umgeschalten werden kann, ohne einen Menschen zu gefährden, da bevorzugt sichergestellt wurde, dass ein gewünschtes Objekt manipuliert wird, bevorzugt gegriffen wird/ist.

Um im obigen Beispiel zu bleiben, kann das Überwachen ausschließen, dass sich ein Mensch oder ein Körperteil eines Menschen im Greifbereich eines Greifers, im Schweißbereich eines Schweißwerkzeuges oder allgemein im Einsatzbereich eines Endeffektors befindet, wenn erkannt wurde, dass ein gewünschtes Objekt manipuliert wird.

Das Überwachen, ob ein gewünschtes Objekt manipuliert wird, erfolgt vorzugsweise durch eine sichere Sensorik, sodass sicher festgestellt werden kann, dass ein gewünschtes Objekt manipuliert wird. Wenn ein gewünschtes Objekt manipuliert wird, kann das MRK-System die Leistung, mit der der Endeffektor betrieben wird erhöhen, sodass der Endeffektor ohne Begrenzung der Leistung eingesetzt werden kann. Beispielsweise kann die Greifkraft, welche auf ein Objekt/Werkstück ausgeübt wird, durch die erhöhte Leistung erhöht werden. Ebenso kann eine Temperatur soweit erhöht werden, dass beispielsweise ein Schweißen möglich ist. Auf diese Weise wird im ersten Betriebsmodus sichergestellt, dass beispielsweise beim Schließen eines Greifers kein Mensch gefährdet/verletzt werden kann, aber dann im zweiten Betriebsmodus genügend Kraft vorhanden oder bereitgestellt ist, sobald das Objekt gegriffen wurde, um dieses bewegen zu können, ohne dass es beispielsweise aus dem Greifer fällt. Insbesondere braucht, um in den zweiten Betriebszustand umzuschalten, die Position des Endeffektors und/oder der Teile des Endeffektors nicht verändert werden. Ist beispielsweise ein Objekt im ersten Betriebszustand gegriffen, so kann in den zweiten Betriebszustand (mit erhöhter Greifkraft) umgeschaltet werden, ohne den Greifer öffnen und/oder neu positionieren zu müssen. Ein Mensch kann somit auch beim Umschalten nicht gefährdet werden, da beispielsweise kein Körperteil oder etwa Kleidung zwischen Objekt und Greifer einbracht werden kann.

Somit kann das MRK-System ohne Beschränkungen eingesetzt werden, sodass sich ein erweitertes Anwendungsfeld gegenüber herkömmlichen MRK-Systemen ergibt. Zudem ist das beschriebene Verfahren einfacher als bekannte sichere Regelungsverfahren.

Vorzugsweise ist die Leistung, mit welcher der Endeffektor im ersten Betriebsmodus betrieben wird, von einem oberen Grenzwert begrenzt, wobei die Einhaltung des oberen Grenzwerts überwacht und/oder sichergestellt wird. Vorzugsweise definiert der obere Grenzwert einen Strom, einen Druck, eine Kraft oder einen Moment und ist vorzugsweise so gesetzt, dass im ersten Betriebsmodus kein Mensch gefährdet wird bzw. gefährdet werden kann.

Insbesondere muss der obere Grenzwert nicht in der gleichen physikalischen Größe definiert sein, wie die Leistung, mit welcher der Endeffektor betrieben wird. Typischerweise wandeln Endeffektoren eine zugeführte Energieform in eine andere um. Greifer wandeln beispielsweise elektrischen Strom und/oder pneumatischen Druck in Greifkraft. Die Definition des oberen Grenzwertes kann daher in der gleichen physikalischen Größe wie die der Leistung, mit welcher der Endeffektor betrieben wird oder in der gewandelten physikalischen Größe erfolgen.

Daher ist es möglich, den ersten Betriebsmodus durch eine Angabe einer maximalen Kraft zu begrenzen, obwohl dem Endeffektor beispielsweise Energie in Form von elektrischem Strom zugeführt wird. Analog ist die Definition des oberen Grenzwertes für die Zuführung von Druck in hydraulischen und/oder pneumatischen Antrieben, sowie bei der Zuführung von Kraft oder Momenten in mechanischen Systemen möglich.

Vorzugsweise ist dieser obere Grenzwert des ersten Betriebsmodus so gewählt, dass kein Mensch gefährdet wird bzw. gefährdet werden kann. Je nach Konstruktion und Anwendung des Endeffektors können sich unterschiedliche obere Grenzwerte ergeben. Wird beispielsweise eine Schweißelektrode betrieben und erhitzt sich die Schweißelektrode dabei, so kann der obere Grenzwert beispielsweise von der Abschirmung der Schweißelektrode abhängen. Ist keine Abschirmung vorgesehen, so kann es notwendig sein, den oberen Grenzwert so zu wählen, dass die maximale Temperatur der Schweißelektrode beispielsweise auf 60° Celsius begrenzt ist. Ist hingegen eine Abschirmung zum Schutz von Menschen vorgesehen, so können entsprechend höhere Temperaturen zulässig sein. Analog gilt dies auch für die Begrenzung anderer Leistungsformen. Eine Gefährdung eines Menschen ist immer dann gegeben, wenn mit einer Verletzung zu rechnen ist.

Vorzugsweise erfolgt das Überwachen, ob ein gewünschtes Objekt manipuliert wird, sicher und bevorzugt durch zumindest zwei Sensoren. Bevorzugt wird durch die Überwachung mit zumindest zwei Sensoren eine redundante und demnach sichere Überwachung ermöglicht. Sicher bedeutet in diesem Fall bevorzugt, dass über zwei Kanäle, und somit redundant, Werte, Kräfte, Momente und/oder weiteres ermittelt und/oder an die Steuerung übertragen und/oder dort ausgewertet wird/werden. Besonders bevorzugt können die Sensoren redundante Sensoren sein. Eine sichere Überwachung dient der Vermeidung von Fehlern im MRK-System und/oder von Fehlern bei der Überwachung, wodurch fehlerhafte Sensorsignale vermieden und/oder erkannt werden können. Dies kann beispielsweise durch die Verwendung von zwei Sensoren erfolgen, welche bevorzugt ein selbes bzw. gleiches zu messendes Ereignis bzw. eine selbe bzw. gleiche zu messende Änderung detektieren. Beispielsweise wird mittels der Sensoren ermittelt, ob das gewünschte Objekt manipuliert und besonders bevorzugt, ob das gewünschte Bauteil gegriffen wird/wurde. Melden beide Sensoren, dass ein gewünschtes Objekt sicher manipuliert wird, so kann davon ausgegangen werden, dass kein fehlerhaftes Sensorsignal vorliegt. Ebenso können die Sensoren sicher rückmelden, dass ein bestimmtes Objekt/Werkstück gegriffen, bearbeitet, vermessen oder transportiert wird. Weiterhin können vorzugsweise Sensoren verwendet werden, mittels derer die Gefährdung eines Menschen direkt ausgeschlossen werden kann. Vorzugsweise sind dies thermische Sensoren, wie beispielsweise Wärmebildkameras, mittels derer festgestellt werden kann, dass sich kein Mensch und/oder kein Körperteil in einem potentiell gefährlichen Bereich, wie etwa dem Arbeitsbereich des Endeffektors befindet.

Vorzugsweise erfolgt das Überwachen, ob ein gewünschtes Objekt manipuliert wird, mittels zumindest eines kapazitiven, induktiven, resistiven und/oder thermischen Sensors, welcher vorzugsweise an dem Endeffektor angeordnet ist. Andere Sensoren, wie etwa ein pyroelektrischer, thermoelektrischer, piezoelektrischer, photoelektrischer, magnetoelektrischer Sensor und/oder ein Sensor zur Erfassung von Bildung elektrochemischer Potentiale an Grenzschichten, Änderung der Austrittsarbeit an Phasengrenzen, lonenleitfähigkeit von Elektrolyten, hygroskopischen Eigenschaften und mechanischer Größen wie Flächendruck und Coriolis-Kraft können ebenso zur Überwachung, ob ein gewünschtes Objekt manipuliert wird, eingesetzt werden. Derartige Sensoren können beispielsweise zwischen typischen Objekt-Werkstoffen, wie Kunststoff, Keramik oder Metall, und Haut, Haaren und/oder Kleidung eines Menschen unterscheiden. Sind diese Sensoren am Endeffektor angeordnet, so kann sicher unterschieden werden, ob es sich beim manipulierten Objekt um einen Menschen oder um ein Objekt/Werkstück handelt. Mögliche Gefährdungen eines Menschen können folglich erkannt und vermieden werden.

Vorzugsweise erfolgt das Überwachen, ob ein gewünschtes Objekt manipuliert wird, mittels zumindest eines optischen und/oder akustischen Sensors, wobei mittels des optischen und/oder akustischen Sensors erkannt werden kann, ob ein Objekt, und/oder welches Objekt, beim Einsetzen des Endeffektors manipuliert wird. Derartige optische und/oder akustische Sensoren können beispielsweise Kameras, laserbasierte Sensoren oder ultraschallbasierte Sensoren sein. Diese Sensoren werden typischerweise neben oder am Endeffektor angeordnet, oder sie können ortsfest oder mobil an anderer geeigneter Stelle angeordnet sein.

Insbesondere sind akustische und/oder optische Sensoren geeignet, bestimmte Objekte, wie Werkstücke zu erkennen. Durch geeignete Signalverarbeitung kann zwischen Objekten (Werkstücken) und Menschen unterschieden werden. Optische und/oder akustische Sensoren sind sehr vielseitig einsetzbar und können leicht an sich verändernde Anwendungen angepasst werden. Insbesondere können dem System neue Objekte geteacht werden, ohne die Hardware anpassen zu müssen.

Vorzugsweise erfolgt das Überwachen, ob ein gewünschtes Objekt manipuliert wird, mittels zumindest zwei unterschiedlicher Sensoren. Die Verwendung unterschiedlicher Sensoren, also das Nutzen unterschiedlicher Detektionsverfahren, wie beispielsweise Positionserkennung, kapazitive, induktive und rezessive und/oder thermische Sensoren und/oder akustische und/oder optische Sensoren, ermöglicht eine sichere Bestimmung, ob ein gewünschtes Objekt manipuliert wird. Insbesondere können durch die Verwendung unterschiedlicher Sensoren unterschiedliche physikalische Eigenschaften überwacht werden. Dies führt zu einer höheren Erkennungswahrscheinlichkeit eines gewünschten zu manipulierenden Objekts und somit zu einer höheren Erkennungswahrscheinlichkeit einer Gefährdung eines Menschen. Weiterhin erlaubt die Verwendung unterschiedlicher Sensoren eine Überwachung unter sich verändernden Umgebungsbedingungen, so dass ein Ausfall der Sensorik und/oder fehlerhafte Sensorsignale verhindert und/oder deren Auftrittswahrscheinlichkeit zumindest verringert werden kann.

Vorzugsweise wird die Überwachung, ob ein gewünschtes Objekt manipuliert wird, zeitabhängig und/oder ortsabhängig im ersten Betriebsmodus durchgeführt. Soll beispielsweise ein Objekt mittels eines Endeffektors gegriffen werden, so ist typischerweise die Zeitdauer bekannt, die benötigt wird um den Greifvorgang auszuführen. Wird der Endeffektor im ersten Betriebsmodus eingesetzt, so ist die Leistung, mit welcher der Endeffektor betrieben wird, reduziert, und die Gefährdung eines Menschen aufgrund der reduzierten Leistung ausgeschlossen. Nach Ablauf der Zeitdauer, die benötigt wird, um den Greifvorgang auszuführen, wird überwacht, ob das gewünschte Objekt manipuliert wird, durchgeführt. Ist dies der Fall, kann anschließend in dem zweiten Betriebsmodus die Leistung erhöht werden, um das Objekt mit der erforderlichen hohen Kraft zu greifen.

Vorzugsweise wird der Endeffektor von zumindest einem elektrischen Motor angetrieben, wobei der obere Grenzwert einen maximalen Motorstrom definiert, und wobei der Motorstrom des zumindest einen elektrischen Motors überwacht wird und mit einem oberen Grenzwert verglichen wird, wobei die Überwachung vorzugsweise redundant ausgeführt wird.

Bevorzugt kann auch lediglich sichergestellt werden, dass der Motorstrom des zumindest einen elektrischen Motors einen oberen Grenzwert nicht überschreiten kann. Hierbei kann insbesondere das Sicherstellen redundant erfolgen.

Dies führt zu einer Reduzierung des Überwachungsaufwands. Soll beispielsweise ein Objekt mit einem elektrisch angetriebenen Endeffektor (Greifer) gegriffen werden, so wird im ersten Betriebsmodus der Motorstrom des Greifers, bzw. der Motorstrom der Motoren, welche die Greifbewegung erzeugen, auf Einhaltung des oberen Grenzwerts überwacht. Bevorzugt wird sichergestellt, dass dem Greifer und/oder den Motoren, welche die Greifbewegung erzeugen, nur ein (Motor-)Strom zur Verfügung steht, welcher den oberen Grenzwert nicht übersteigt. Steigt der Motorstrom an, so wird erkannt, dass der Endeffektor das Objekt bereits leicht kontaktiert und eine Greifkraft auf das Objekt aufgebracht wird. Ist ein oberer Grenzwert definiert, so kann das Greifen unterbrochen werden, wenn eine dem Grenzwert entsprechende Greifkraft auf ein Objekt aufgebracht ist. Der Grenzwert kann in Form eines Motorstroms bestimmt sein. Ebenso können entsprechende Sensoren am Endeffektor angebracht sein, die z.B. eine Bestimmung der Greifkraft ermöglichen (z.B. eine Kraftmessdose, Dehnmessstreifen o.ä.). Bevor in den zweiten Betriebsmodus umgeschaltet wird, in welchem der Grenzwert überschritten wird, d. h. die dem Endeffektor zugeführte Energie wird erhöht, wird überprüft, ob das gegriffene bzw. manipulierte Objekt sicher kein Mensch ist. Ist kein Mensch gegriffen, kann in den zweiten Betriebsmodus gewechselt werden und die Greifkraft erhöht werden. Folglich muss die Überprüfung ob ein gewünschtes Objekt manipuliert bzw. gegriffen ist, oder ob ein Mensch gefährdet ist, nicht permanent durchgeführt werden, sondern nur vor dem Wechsel in den zweiten Betriebsmodus bzw. vor der Überschreitung des oberen Grenzwertes des ersten Betriebsmodus.

Vorzugsweise wird der Motorstrom dabei mittels zumindest eines Regler geregelt, wobei die Regelung vorzugweise nicht-sicher erfolgt. Die Regelung des Motorstroms kann im obigen Beispiel in nicht-sicherer Weise erfolgen, wenn der obere Grenzwert so gewählt ist, dass im ersten Betriebsmodus eine Gefährdung eines Menschen durch den Endeffektor ausgeschlossen ist, d.h. sicher erkannt werden kann, dass ein gewünschtes zu manipulierendes Objekt vorliegt und/oder manipuliert ist oder wird. In dem Fall muss lediglich in sicherer Weise überwacht werden, dass der obere Grenzwert eingehalten wird bzw. nicht überschritten werden kann. Alternativ ist es möglich, eine redundante, sichere Regelung durchzuführen und zu überwachen, ob die verwendeten Regler gleiche Regelausgaben liefern, womit die Regelung als sicher zu bewerten ist. Jedoch ermöglicht es insbesondere die nicht-sichere Regelung unter Verwendung nur eines Reglers den Regelaufwand zu reduzieren und Ressourcen sowie Rechenleistung einzusparen. Diese Ausführung bezieht sich hierbei auf die Verwendung von zwei Reglern. Generell gilt eine Regelung als sicher, wenn eine redundante Ermittlung von Daten/Werten oder Ähnlichem erfolgt, beispielsweise wenn durch zwei verschiedene Sensoren eine von einem Greifer auf ein Objekt aufgebrachte Kraft ermittelt wird. Demnach liegt bevorzugt ein nicht sicheres System oder eine nicht sichere Regelung vor, wenn nur eine von Art Daten bzw. Messwerten oder Ähnliches ermittelt wird bzw. keine redundante Ermittlung vorliegt.

Vorzugsweise wird der Endeffektor elektrisch, hydraulisch und/oder pneumatisch betrieben. Insbesondere der Betrieb mit hydraulischem und/oder pneumatischem Druck ist in Greifanwendungen weit verbreitet, da dem Endeffektor lediglich Druckschläuche zugeführt werden müssen. Somit müssen dem Manipulator nur wenige Aufbauten zugefügt werden. Elektrische Antriebe haben hingegen den Vorteil, dass diese vielseitig einsetzbar sind und beispielsweise eine variabel regelbare Greifkraft oder ein geregeltes Drehmoment bereitstellen können.

Vorzugsweise umfasst das Verfahren weiterhin einen Verfahrensschritt, wonach die dem Endeffektor zugeführte Energie abgeschaltet wird, wenn die Überwachung ergeben hat, dass ein Mensch gefährdet ist und/oder kein gewünschtes Objekt manipuliert wird. Somit kann sichergestellt werden, dass bei einer erkannten Gefährdung eines Menschen keine Verletzung des Menschen hervorgerufen wird. Mittels der dem Endeffektor zugeführten Energie wird der Endeffektor mit einer reduzierten und/oder erhöhten Leistung betrieben, sodass eine reduzierte/erhöhte Leistung zum Manipulieren und/oder Bearbeiten eines Objekts/Werkstücks zur Verfügung steht.

Vorzugsweise ist der Endeffektor ein Greifer, welcher im ersten Betriebsmodus ein Objekt mit einer reduzierten Greifkraft greift, wobei der Greifer im zweiten Betriebsmodus ein Objekt mit einer erhöhten Greifkraft greift, wenn die Überwachung ergeben hat, dass ein gewünschtes Objekt manipuliert wird. Somit kann beispielsweise ein zu greifendes Objekt zunächst mit reduzierter Greifkraft berührt werden. Wird erkannt, dass ein gewünschtes Objekt manipuliert/gegriffen wird, also kein Mensch gefährdet ist, kann die Greifkraft erhöht werden und der Greifer ohne eine Beschränkung der Greifkraft betrieben werden. Dabei braucht der Greifer beim Umschalten vom ersten in den zweiten Betriebsmodus nicht erneut geöffnet werden sondern kann in der Stellung des ersten Betriebsmodus verbleiben, sodass kein Körperteil und/oder Kleidung zwischen das Objekt und den Greifer eingebracht werden kann. Die maximale Greifkraft wird bevorzugt nur von dem verwendeten Greifer und der Empfindlichkeit des zu greifenden Objekts vorgeben. Somit sind vielfältige Anwendungen vorstellbar. Beispielsweise ist beim Transportieren von Objekten die Traglast des MRK-Systems nur durch die maximale Traglast des verwendeten Manipulators beschränkt. Weiterhin müssen keine konstruktiven Maßnahmen, wie Endanschläge oder dergleichen, ergriffen werden, um eine Gefährdung eines Menschen auszuschließen (wobei diese natürlich dennoch zusätzlich vorgesehen sein könnten). Somit wird der Arbeitsbereich des MRK-Systems nicht eingeschränkt.

Vorzugsweise umfasst der Greifer zumindest zwei Greifelemente, wobei das Überwachen, ob ein gewünschtes Objekt manipuliert wird, durch die Überwachung der Positionierung der Greifelemente zueinander erfolgt. Die Überwachung der Positionierung der Greifelemente vereinfacht die Überwachung, da beispielsweise ein Abstand der Greifelemente zueinander beim Greifen eines gewünschten, zu manipulierendes Objekts bekannt ist. Ist der Abstand der Greifelemente im ersten Betriebszustand erreicht, so wird das Objekt mit einer reduzierten Greifkraft, welche der reduzierten Leistung entspricht gegriffen. Anschließend kann in der, vorzugsweise ruhenden, Stellung des Manipulators überprüft werden, ob das gewünschte Bauteil gegriffen wurde Besonders bevorzugt kann ein erster Sensor zur Überwachung ein Positionssensor sein. Als Positionssensor muss nicht explizit ein Sensor an sich angeordnet sein, sondern jegliches Element, das die Position der Greifelemente, welche bevorzugt als die Position der Greifelemente zueinander ermittelt wird, ermitteln bzw. bestimmen kann, ist als entsprechender Sensor anzusehen.. Sodann kann in den zweiten Betriebszustand umgeschaltet und die Leistung, mit der der Endeffektor betrieben, wird (d.h. die Greifkraft) erhöht werden.

Der Abstand der Greifelemente zueinander, beim Greifen eines gewünschten, zu manipulierendes Objekts ist dabei vorzugsweise so gewählt, dass zwischen Greifer und Objekt kein Mensch und kein Teil eines Menschen eingebracht werden kann. Analog ist die Überwachung der Position für andere Endeffektoren umsetzbar.

Die Aufgabe wird weiterhin gelöst durch ein MRK-System, umfassend zumindest einen Manipulator, an welchem ein Endeffektor angeordnet ist. Weiterhin ist eine Steuervorrichtung des MRK-Systems dazu eingerichtet, den Endeffektor in einem ersten Betriebsmodus einzusetzen, wobei der Endeffektor im ersten Betriebsmodus mit reduzierter Leistung betrieben wird. Ein Sensor, welcher dazu eingerichtet ist zu überwachen, ob beim Einsetzen des Endeffektors ein gewünschtes Objekt manipuliert wird, und ein Steuerelement, welches dazu eingerichtet ist, die Leistung, mit welcher der Endeffektor betrieben wird, zu erhöhen, um den Endeffektor in einem zweiten Betriebsmodus einzusetzen, wenn die Überwachung ergeben hat, dass ein gewünschtes Werkstück manipuliert wird, sind ebenfalls vom MRK-System umfasst.

Derartige MRK-Systeme sind geeignet, das oben beschriebene Verfahren auszuführen und die beschriebenen Vorteile zu erzielen. Das Steuerelement, welches dazu eingerichtet ist, die Leistung, mit welcher der Endeffektor betrieben wird, zu erhöhen, kann beispielsweise eine zusätzliche Energiequelle umfassen, die im zweiten Betriebsmodus zugeschaltet wird. Wird elektrische Energie zugeführt, kann das Steuerelement einen Schalter umfassen, welcher zwischen der reduzierten Leistung des ersten Betriebsmodus und der erhöhten Leistung des zweiten Betriebsmodus umschaltet. Soll der Endeffektor mit hydraulischem und/oder pneumatischem Druck eingesetzt werden, so kann das Steuerelement beispielsweise eine einstellbare Drossel umfassen. Mittels dieser Drossel kann der Endeffektor im ersten Betriebsmodus mit einem reduzierten Druck betrieben werden und in einem zweiten Betriebsmodus der Druck (d.h. die Luftmenge) erhöht werden. Weitere Steuerelemente zur Erhöhung der Leistung können ebenfalls vorgesehen werden.

Vorzugsweise ist die Steuervorrichtung zur Auswertung der Sensoren eingerichtet. Eine zentrale Auswertung der Sensoren in der Steuervorrichtung ist vorteilhaft, da in unmittelbarer Nähe der Sensoren keine weiteren Recheneinheiten bereitgestellt werden müssen. Alternativ können jedoch auch Rechenaufgaben, wie die Auswertung von Sensoren in dezentralen Recheneinheiten wie Mikrocontrollern, Prozessoren und/oder dergleichen ausgeführt werden. Vorzugsweise erfolgt die Anbindung der Sensoren und/oder der dezentralen Recheneinheiten mit der Steuervorrichtung über ein sicheres Bussystem, wie z.B. Fail Safe over EtherCat (FSoE), SafetyBUS p, CANopen-Safety, CIP Safety, PROFIsafe oder dergleichen.

Der Endeffektor ist vorzugsweise elektrisch, pneumatisch oder hydraulisch betrieben und vorzugsweise zum Bearbeiten, Greifen, Vermessen und/oder Transportieren eines Objekts eingerichtet. Insbesondere können durch die Bereitstellung von zwei unterschiedlichen Betriebsmodi herkömmliche Endeffektoren in MRK-Systemen eingesetzt werden, ohne diese für den Einsatz im MRK-System abwandeln zu müssen. Somit wird insbesondere das Spektrum der MRK-fähigen, verfügbaren Endeffektoren signifikant erhöht.

Im Folgenden wird die Erfindung unter Bezugnahme auf die angefügten Figuren im Detail erläutert. Dabei zeigt
- Fig. 1: eine schematische Darstellung eines MRK-Systems;
- Fig. 2: ein schematisches Flussdiagramm eines Verfahrens zum Steuern eines MRK-Systems;
- Fig. 3: eine schematische Darstellung einer Vorrichtung zum Überwachen, ob ein gewünschtes Werkstück manipuliert wird und zum Erhöhen der Leistung, mit der der Endeffektor betrieben wird;
- Fig. 4: eine weitere schematische Darstellung einer Vorrichtung zum Steuern des MRK-Systems; und
- Fig. 5: eine weitere schematische Darstellung einer Vorrichtung zum Steuern des MRK-Systems.

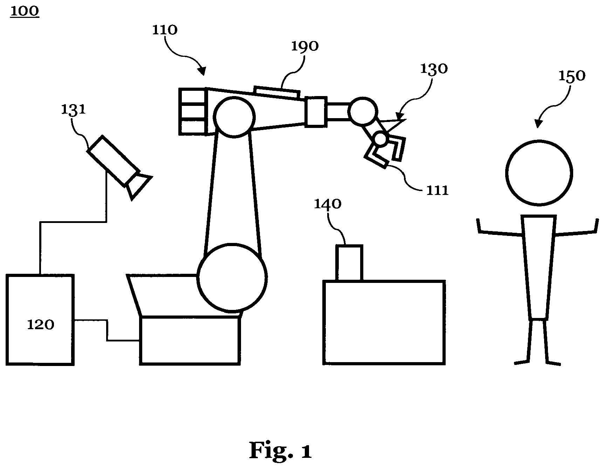

Insbesondere zeigt Fig. 1 ein MRK-System 100, umfassend einen Manipulator 110, welcher als Industrieroboter mit zumindest drei frei programmierbaren Bewegungsachsen ausgeführt ist. Der Manipulator 110 führt einen Endeffektor 111, der in der Darstellung von Figur 1 ein Greifer ist. Der Greifer 111 ist dazu eingerichtet, Objekte 140 zu greifen bzw. zu manipulieren. Insbesondere ist der Manipulator 110 ein MRK-fähiger Manipulator, sodass eine Kollaboration zwischen Manipulator 110 und Mensch 150 ermöglicht wird.

Beispielsweise kann der Manipulator 110 dazu eingerichtet sein, das Objekt 140 mittels des Endeffektors 111 zu greifen und zu transportieren. Der Mensch 150 kann in dem MRK-System beispielsweise die Aufgabe übernehmen, eine Feinpositionierung des gegriffenen Objekts 140 vorzunehmen, so dass Montageschritte korrekt ausgeführt werden oder aber neben dem Roboter anderweitige, bevorzugt zugehörige Arbeiten ausführen.

Der Endeffektor 111 kann insbesondere mit einem Sensor 130 oder mehreren Sensoren 130 bereitgestellt sein, welche eine Detektion eines Menschen und/oder eines Objekts bzw. Werkstücks ermöglichen. Diese Sensoren 130 können beispielsweise kapazitive, induktive, resistive oder thermische Sensoren sein. Ebenso kann ein Sensor angebracht sein, welcher die Greifkraft oder ein Moment überwachen kann oder der beispielsweise einen Motorstrom oder einen Druck überwacht. Des Weiteren kann ein Sensor eine Positionierung der Greifelemente zueinander überwachen.

Weiterhin kann ein optischer und/oder akustischer Sensor 131 bereitgestellt sein, welcher erkennt, ob und/oder welches Bauteil vom Endeffektor 111 manipuliert wird. Dieser optische und/oder akustische Sensor 131 kann beispielsweise Kameras oder Ultraschallsensoren aufweisen und in der Nähe des Manipulators 110, in der Nähe der bevorzugten Greifposition oder am Manipulator 110 angebracht sein. Vorzugsweise erfolgt die Auswertung des Sensors 130 und/oder der Sensoren 130, 131 mittels einer Steuervorrichtung 120, welche zur Steuerung des MRK-System 100 eingerichtet ist. Ebenso kann der Sensor 130 und/oder der Sensor 131 in zumindest einer dezentralen Recheneinheit, welche in unmittelbarer Nähe der Sensoren 130, 131 oder am Manipulator 110 angebracht ist, ausgewertet werden. Dies ermöglicht beispielsweise eine autonome Regelung des Endeffektors 111.

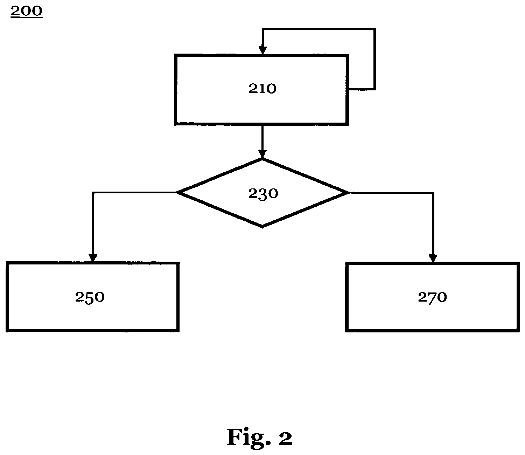

Fig. 2 zeigt eine schematische Darstellung eines Verfahrens 200 zum Steuern eines MRK-Systems. In einem ersten Verfahrensschritt 210 des Verfahrens 200 wird ein Endeffektor, wie beispielsweise der Greifer 111, in einem ersten Betriebsmodus eingesetzt, wobei der erste Betriebsmodus dadurch gekennzeichnet ist, dass der Endeffektor mit einer reduzierten Leistung betrieben wird. Dadurch ist beispielsweise die maximale Greifkraft des Greifers beschränkt, bzw. ist die Kraft beschränkt, mit der sich die Greifbacken aufeinander zu bewegen. Im Verfahrensschritt 230 wird überwacht, ob ein gewünschtes Objekt manipuliert/gegriffen wird. Ebenso kann beim Einsetzen des Endeffektors 210 überwacht werden, ob ein oberer Grenzwert des ersten Betriebsmodus überschritten wird. Diese Überwachung erfolgt vorzugsweise mittels Sensoren, die beispielsweise eine Greifkraft, einen Motorstrom oder allgemein, die dem Endeffektor zugeführte Energie oder die vom Endeffektor gewandelte Energie, und/oder die Leistung, mit der der Endeffektor betrieben wird, überwachen.

Wird in Schritt 230 festgestellt, dass kein gewünschtes Objekt manipuliert/gegriffen wird und ein Mensch gefährdet ist, so wird in Verfahrensschritt 270 die dem Endeffektor 111 zugeführte Energie abgeschaltet, um eine Gefährdung und/oder Verletzung eines Menschen zu verhindern, oder auf ein geringes Maß zu begrenzen. Die Überwachung 230, ob ein gewünschtes Objekt manipuliert/gegriffen wird, erfolgt vorzugsweise mittels thermischer, resistiver, kapazitiver, induktiver, akustischer Positions- und/oder optischer Sensoren 130, 131. Ergibt die Überwachung 230, dass ein gewünschtes Objekt manipuliert/gegriffen wird bzw. kein Mensch gefährdet ist, so kann in Schritt 250 in einen zweiten Betriebsmodus geschalten werden, in welchem die Leistung, mit welcher der Endeffektor 111 betrieben wird, erhöht wird.

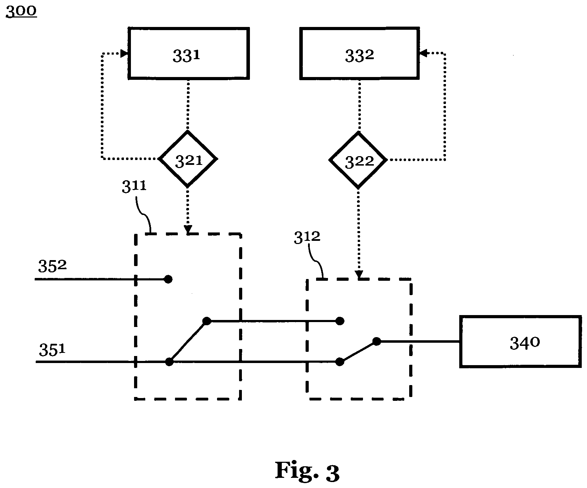

Fig. 3 zeigt eine schematische Darstellung einer Vorrichtung 300 zum Steuern eines MRK-Systems, wobei die Leistung 351, 352, mit der der Endeffektor 340 betrieben wird, von einem ersten reduzierten Leistung 351 auf eine zweite erhöhte Leistung 352 umgeschaltet werden kann. Dazu sind die Steuerelemente 311, 312 vorgesehen, welche beispielsweise Schalter oder Ventile sind. Die Steuerelemente 311, 312 ermöglichen ein sicheres Umschalten von dem ersten Betriebszustand, in welchem der Endeffektor 340 mit reduzierter Leistung 351 betrieben wird, auf einen zweiten Betriebszustand. Im zweiten Betriebszustand wird der Endeffektor 340 mit erhöhter Leistung 352 betrieben.

Beispielsweise kann die Leistung 351, 352 in Form von elektrischem Strom unterschiedlicher Stromstärke, Druck, wie etwa hydraulischer und/oder pneumatischer Druck, oder dergleichen bereitgestellt sein. Die Steuerelemente 311, 312 werden jeweils geschaltet, wenn ein zugeordneter Sensor 331, 332 erkennt, dass ein gewünschtes Objekt manipuliert wird. Durch die Bereitstellung von zwei Sensoren 331, 332, welche eine Redundanz erzeugen, und die serielle Verschaltung der Mittel 311, 312 wird erst dann in den zweiten Betriebszustand umgeschaltet, wenn beide Sensoren 331, 332 erkennen, dass ein gewünschtes Objekt manipuliert wird. Des Weiteren können bevorzugt die Sensoren 331, 332 redundante Sensoren sein.

Die Sensorsignale der Sensoren 331, 332 werden zyklisch überwacht und in zumindest einer Recheneinheit 321, 322, welche in einer Steuervorrichtung 120 des MRK-Systems 100 integriert sein oder separat ausgebildet sein kann, ausgewertet. Erkennen die Sensoren 331, 332, dass ein gewünschtes Objekt manipuliert wird, so wird ein Schaltsignal an die Steuerelemente 311, 312 gesendet, welches vorgibt, von der reduzierten Leistung 351 auf die erhöhte Leistung 352 zu schalten. Wird hingegen kein gewünschtes Objekt manipuliert und ist ein Mensch gefährdet, so wird kein Schaltsignal an die Steuerelemente 311, 312 gesendet, und mit der Überwachung so lange fortgefahren, bis ein gewünschtes Objekt manipuliert wird und die Gefährdung nicht mehr vorliegt.

Die Leistung 351, 352, mit der der Endeffektor 340 betrieben wird, ist vorzugsweise ungeregelt, und durch einen oberen Grenzwert begrenzt. Beispielsweise kann in einem ersten Betriebszustand dem Endeffektor 340 ein erster (reduzierter) Motorstrom oder ein reduzierter Druck (z.B. in Form von Luftdruck oder Öldruck) zugeführt werden. Wird ein gewünschtes Objekt manipuliert, so wird der Motorstrom/Druck auf einen zweiten Wert 252 erhöht. Vorzugsweise ist dabei die reduzierte Leistung 351 so gewählt, dass mittels des Endeffektors 340 keine Gefährdung für einen Menschen entsteht. Hierdurch muss nicht überwacht werden, welche Leistung bzw. Kraft beim Greifen wirkt und auf einen Menschen übertragen werden könnte, da nur eine begrenzte reduzierte Leistung bzw. Kraft im ersten Betriebsmodus zugelassen ist.

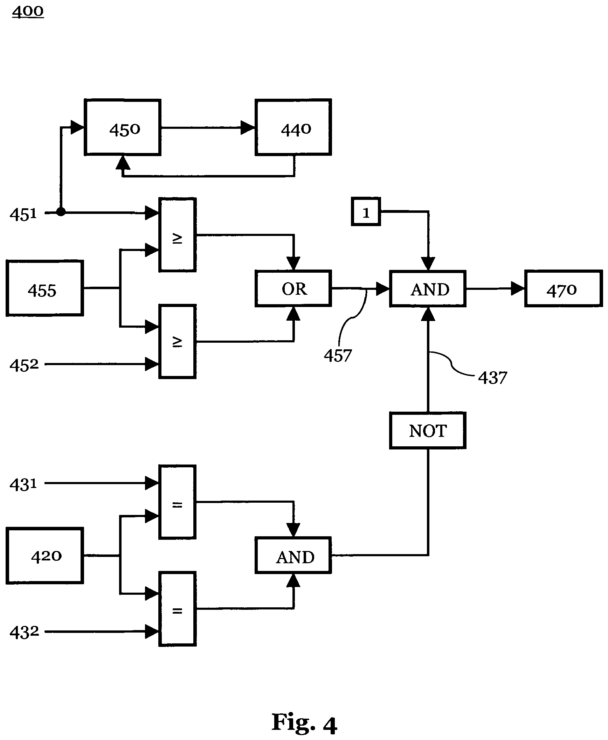

Fig. 4 zeigt eine weitere schematische Darstellung einer Vorrichtung 400 zum Steuern eines MRK-Systems. Ein Endeffektor bzw. ein Antrieb eines Endeffektors 440 wird mittels eines Reglers 450 geregelt. Die Regelung kann beispielsweise eine Kraftregelung, eine Positionsregelung, eine Stromregelung, eine Druckregelung und/oder dergleichen sein. Im Folgenden wird, um die Beschreibung zu vereinfachen, von einer Stromregelung ausgegangen.

In einem ersten, oberen Block, wird der Motorstrom 451, 452 überwacht und redundant gegen einen oberen Grenzwert 455 verglichen. Der obere Grenzwert beschränkt die reduzierte Leistung, mit welcher der Endeffektor im ersten Betriebsmodus betrieben wird. Erkennt ein Komparator (durch "≥" gekennzeichnet) eine Überschreitung des Grenzwerts 455, so wird beispielsweise eine logische "1" ausgegeben. Die Ausgaben der redundanten Komparatoren werden über eine "OR"-Verknüpfung verknüpft. Meldet ein Komparator die Überschreitung des Grenzwerts 455, so geht das System von der Überschreitung des Grenzwerts 455 aus, und ein Grenzwertsignal 457 wird ausgegeben.

Beispielsweise kann der Endeffektor 440 ein Greifer sein, welcher elektrisch betrieben ist. Die maximale Greifkraft des Greifers ist durch einen oberen Grenzwert 455, also durch die Leistung, mit welcher der Greifer betrieben wird, beschränkt. Beispielsweise ist der obere Grenzwert ein Motorstrom. Wird dieser Grenzwert 455 von dem redundant überwachten Motorstrom 451, 452 überschritten, so wird dies erkannt und mit dem Überwachungssignal 437, welches in dem unteren Block generiert wird, verglichen.

Dieses Überwachungssignal 437 wird mittels der Sensorsignale 431, 432 generiert. Beispielsweise werden die Sensorsignale 431, 432 durch kapazitive, induktive, resistive, Positions- und/oder thermische Sensoren sowie durch akustische und/oder optische Sensoren oder einer Kombination abgeleitet. Diese Sensorsignale 431, 432 werden gegen einen Vergleichswert 420 verglichen. Beispielsweise gibt der Vergleichswert 420 an, dass ein gewünschtes Objekt manipuliert wird, also vorzugsweise kein Mensch gefährdet ist. Geben beide Sensorsignale 431, 432 an, dass ein gewünschtes Objekt manipuliert wird, also vorzugsweise kein Mensch gefährdet ist, so wird über die "AND"-Verknüpfung eine logische "1" ausgegeben. Gibt hingegen zumindest ein Sensorsignale 431, 432 an, dass kein gewünschtes Objekt manipuliert wird, also eine potentielle Gefährdung vorliegt, so wird eine logische "0" ausgegeben. Diese Ausgabe wird im "NOT"-Block invertiert, sodass das Überwachungssignal 437 eine logische "1" ausgibt, wenn zumindest eines der Sensorsignal 431, 432 eine potentielle Gefährdung angibt.

Gibt das Grenzwertsignal 457 an, dass der Grenzwert 455 überschritten wurde (logische "1") und das Überwachungssignal 437 an, dass kein gewünschtes Objekt manipuliert wird, also eine potentielle Gefährdung vorliegt (logische "1"), so wird mit Block 470 fortgefahren und die dem Endeffektor zugeführten Energie abgeschaltet, bzw. nicht in den zweiten Betriebszustand geschalten. Insbesondere kann durch die redundante Überwachung des oberen Grenzwerts 455, welcher beispielsweise ein Motorstrom ist, auf eine redundante Regelung des Endeffektors 440 verzichtet werden. Folglich ist nur ein Regler notwendig. Gibt das Überwachungssignal 437 hingegen an, dass ein gewünschtes Objekt manipuliert wird (logische "0"), so wird in den zweiten Betriebsmodus geschaltet und die dem Endeffektor zugeführte Leistung erhöht.

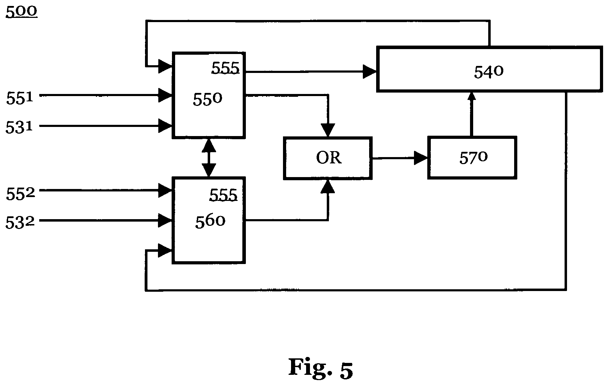

Fig. 5 zeigt eine weitere schematische Darstellung einer weiteren Vorrichtung 500 zum Steuern eines MRK-Systems, wobei zwei Regler 550, 560 eingesetzt werden, um den Endeffektor 540 zu regeln. In dem Beispiel sei der Endeffektor 540 elektrisch betrieben. Andere Ausführungsformen sind möglich. Die Motorposition des Endeffektors 540 wird an die Regler 550, 560 zurückgeführt, um den Endeffektor zu regeln. Weiterhin wird die Leistung 551, 552, mit der der Endeffektor 540 betrieben wird, überwacht und mit einem oberen Grenzwert 555 verglichen. Dies erfolgt redundant mittels der Regler 550, 560. Ebenso werden den Reglern 550, 560 die Sensorsignale 531, 532 zugeführt, welche die Überwachung, ob ein gewünschtes Objekt manipuliert wird, erlauben. Mittels der Regler 550, 560 wird die Einhaltung des Grenzwerts 555 und die Überwachung, ob ein gewünschtes Objekt manipuliert wird, mittels der Sensorsignale 531, 532 redundant überwacht. Die Ausgabe der Regler wird über einen "OR"-Block verglichen. Gibt einer der Regler oder beide Regler 550, 560 an, dass der Grenzwert 555 überschritten und kein gewünschtes Objekt manipuliert wird (bzw. ein Mensch gefährdet ist), so wird die dem Endeffektor 540 zugeführte Energie in Schritt 570 abgeschaltet. Wird ein gewünschtes Objekt manipuliert, kann die dem Endeffektor zugeführte Energie erhöht werden.

### Bezugszeichenliste

- 100: MRK-System
- 110: Manipulator
- 111: Endeffektor
- 120: Steuervorrichtung
- 130, 131: Sensor
- 140: Objekt
- 150: Mensch
- 190: Steuerelement
- 200: Verfahren
- 210: Einsetzen des Endeffektors im ersten Betriebsmodus
- 230: Überwachung, ob ein gewünschtes Objekt manipuliert wird
- 250: Erhöhen der Leistung, mit der der Endeffektor betrieben wird
- 270: Abschalten der dem Endeffektor zugeführten Energie
- 300: Schematische Darstellung einer Vorrichtung zum Steuern eines MRK-Systems
- 311, 312: Steuerelemente
- 321, 322: Recheneinheit
- 331, 332: Sensoren
- 340: Endeffektor
- 351, 352: Leistung, mit der der Endeffektor betrieben wird
- 400: schematische Darstellung einer Vorrichtung zum Steuern eines MRK-Systems
- 420: Vergleichswert
- 431, 432: Sensorsignal
- 437: Überwachungssignal
- 440: Endeffektor
- 450: Regler
- 451, 452: Leistung mit der der Endeffektor betrieben wird
- 455: oberer Grenzwert
- 457: Grenzwertsignal
- 470: Abschalten der dem Endeffektor zugeführten Energie
- 500: schematische Darstellung einer Vorrichtung zum Steuern eines MRK-Systems
- 531, 532: Sensorsignal
- 540: Endeffektor
- 550, 560: Regler
- 551, 552: Leistung, mit der der Endeffektor betrieben wird
- 555: oberer Grenzwert
- 570: Abschalten der dem Endeffektor zugeführten Energie

## Patentansprüche

1. Verfahren (200) zum Steuern eines Mensch-Roboter-Kollaborations-(MRK)-Systems (100), wobei das MRK-System (100)
zumindest einen Manipulator (110) mit einem Endeffektor (111) umfasst, und wobei das Verfahren die folgenden Schritte umfasst:
Einsetzen (210) des Endeffektors (111) in einem ersten Betriebsmodus, wobei der Endeffektor (111) im ersten Betriebsmodus mit reduzierter Leistung (351; 451; 551) betrieben wird;
Überwachen (230), ob beim Einsetzen des Endeffektors (111) im ersten Betriebsmodus ein gewünschtes Objekt (140) manipuliert wird; und
Erhöhen (250) der Leistung (352; 451; 551), mit der der Endeffektor (111) betrieben wird, um den Endeffektor in einem zweiten Betriebsmodus einzusetzen, wenn die Überwachung ergeben hat, dass ein gewünschtes Objekt (140) manipuliert wird.

2. Verfahren (200) nach Anspruch 1, wobei die Leistung, mit welcher der Endeffektor (111) im ersten Betriebsmodus betrieben wird, von einem oberen Grenzwert (455; 555) begrenzt ist, wobei die Einhaltung des oberen Grenzwertes überwacht und/oder sichergestellt wird.

3. Verfahren (200) nach Anspruch 2, wobei der obere Grenzwert (455; 555) einen Strom, einen Druck, eine Kraft oder ein Moment definiert und vorzugsweise so gesetzt ist, dass im ersten Betriebsmodus kein Mensch gefährdet werden kann.

4. Verfahren (200) nach einem der vorangehenden Ansprüche, wobei das Überwachen (230), ob ein gewünschtes Objekt (140) manipuliert wird, sicher erfolgt, vorzugsweise durch zumindest zwei Sensoren (130; 131).

5. Verfahren (200) nach einem der vorangehenden Ansprüche, wobei das Überwachen (230), ob ein gewünschtes Objekt (140) manipuliert wird, mittels zumindest eines kapazitiven, induktiven, resistiven und/oder thermischen Sensors (130) erfolgt, welcher vorzugsweise an dem Endeffektor (111) angeordnet ist.

6. Verfahren (200) nach einem der vorangehenden Ansprüche, wobei das Überwachen (230), ob ein gewünschtes Objekt (140) manipuliert wird, mittels zumindest eines optischen und/oder akustischen Sensors (131) erfolgt, wobei mittels des optischen und/oder akustischen Sensors erkannt werden kann, ob ein Objekt (140), und/oder welches Objekt (140), beim Einsetzen des Endeffektors (111) manipuliert wird.

7. Verfahren (200) nach einem der vorangehenden Ansprüche, wobei das Überwachen (230), ob ein gewünschtes Objekt (140) manipuliert wird, mittels zumindest zwei unterschiedlichen Sensoren (130, 131) erfolgt.

8. Verfahren (200) nach einem der vorangehenden Ansprüche, wobei die Überwachung, ob ein gewünschtes Objekt manipuliert wird, zeitabhängig und/oder ortsabhängig im ersten Betriebsmodus durchgeführt wird.

9. Verfahren (200) nach einem der vorangehenden Ansprüche, wobei
der Endeffektor von zumindest einem elektrischen Motor (440; 540) angetrieben wird, und der obere Grenzwert einen maximalen Motorstrom definiert, wobei der Motorstrom des zumindest einen elektrischen Motors überwacht und mit dem oberen Grenzwert (455; 555) verglichen wird, wobei die Überwachung vorzugsweise redundant ausgeführt wird.

10. Verfahren (200) nach Anspruch 9, wobei der Motorstrom mittels zumindest einem Regler (450; 550, 560) geregelt wird, wobei die Regelung vorzugsweise nicht sicher erfolgt.

11. Verfahren (200) nach einem der vorangehenden Ansprüche, wobei der Endeffektor elektrisch, hydraulisch und/oder pneumatisch betrieben wird.

12. Verfahren (200) nach einem der vorangehenden Ansprüche, wobei
der Endeffektor (111) ein Greifer ist, welcher im ersten Betriebsmodus ein Objekt (140) mit einer reduzierten Kraft greift, und wobei
der Greifer im zweiten Betriebsmodus ein Objekt mit einer erhöhten Kraft greift, wenn die Überwachung ergeben hat, dass ein gewünschtes Objekt (140) gegriffen ist.

13. Verfahren (200) nach Anspruch 12, wobei der Greifer zumindest zwei Greifelemente umfasst, und wobei das Überwachen (230), ob ein gewünschtes Objekt manipuliert wird, durch die Überwachung der Positionierung der Greifelemente zueinander erfolgt.

14. MRK-System (100), umfassend:
zumindest einen Manipulator (110), an welchem ein Endeffektor (111) angeordnet ist;
eine Steuervorrichtung (120), welche dazu eingerichtet ist, den Endeffektor (111) in einem ersten Betriebsmodus einzusetzen, wobei der Endeffektor (111) im ersten Betriebsmodus mit reduzierter Leistung (351; 451; 551) betrieben wird;
zumindest einen Sensor (130; 131), welcher dazu eingerichtet ist zu überwachen, ob beim Einsetzen des Endeffektors (111) im ersten Betriebsmodus ein gewünschtes Objekt (140) manipuliert wird, und
ein Steuerelement (190), welches dazu eingerichtet ist, die Leistung, mit welcher der Endeffektor (111) betrieben wird, zu erhöhen, um den Endeffektor in einem zweiten Betriebsmodus einzusetzen, wenn die Überwachung ergeben hat, dass ein gewünschtes Objekt (140) manipuliert wird

15. MRK-System (100) nach Anspruch 14, wobei die Steuervorrichtung (120) zur Auswertung des zumindest einen Sensors (130; 131) eingerichtet ist.

## Claims

1. A method (200) for controlling a human-robot collaboration (MRK) system (100), wherein the MRK system (100)
comprises at least one manipulator (110) having an end effector (111), and wherein the method comprises the following steps:
operating (210) the end effector (111) in a first operating mode, wherein the end effector (111) is operated at reduced power (351; 451; 551) in the first operating mode;
monitoring (230) whether a desired object (140) is manipulated when the end effector (111) is operated in the first operating mode; and
increasing (250) the power (352; 451; 551) with which the end effector (111) is operated in order to use the end effector in a second operating mode if the monitoring has revealed that a desired object (140) is being manipulated.

2. Method (200) according to claim 1, wherein the power with which the end effector (111) is operated in the first operating mode is limited by an upper limit value (455; 555), wherein compliance with the upper limit value is monitored and/or ensured.

3. Method (200) according to claim 2, wherein the upper limit value (455; 555) defines a current, a pressure, a force or a torque and is preferably set such that no human being can be endangered in the first operating mode.

4. Method (200) according to any of the preceding claims, wherein monitoring (230) whether a desired object (140) is manipulated is performed safely, preferably by at least two sensors (130; 131).

5. Method (200) according to one of the preceding claims, wherein the monitoring (230) of whether a desired object (140) is manipulated is carried out by means of at least one capacitive, inductive, resistive and/or thermal sensor (130), which is preferably arranged on the end effector (111).

6. Method (200) according to one of the preceding claims, the monitoring (230) of whether a desired object (140) is manipulated being carried out by means of at least one optical and/or acoustic sensor (131), it being possible to detect by means of the optical and/or acoustic sensor whether an object (140) and/or which object (140) is manipulated when the end effector (111) is inserted.

7. Method (200) according to one of the preceding claims, wherein monitoring (230) whether a desired object (140) is manipulated is carried out by means of at least two different sensors (130, 131).

8. Method (200) according to one of the preceding claims, wherein the monitoring whether a desired object is manipulated is carried out in a time-dependent and/or location-dependent manner in the first operating mode.

9. Method (200) according to one of the preceding claims, wherein
the end effector is driven by at least one electric motor (440; 540), and the upper limit value defines a maximum motor current, wherein the motor current of the at least one electric motor is monitored and compared with the upper limit value (455; 555), wherein the monitoring is preferably performed redundantly.

10. Method (200) according to claim 9, wherein the motor current is controlled by means of at least one controller (450; 55o, 560), wherein the control is preferably not carried out safely.

11. Method (200) according to one of the preceding claims, wherein the end effector is operated electrically, hydraulically and/or pneumatically.

12. Method (200) according to one of the preceding claims, wherein
the end effector (111) is a gripper which in the first operating mode grips an object (140) with a reduced force, and wherein
the gripper in the second operating mode grips an object with an increased force if the monitoring has shown that a desired object (140) has been gripped.

13. Method (200) according to claim 12, wherein the gripper comprises at least two gripping elements, and wherein monitoring (230) whether a desired object is manipulated is performed by monitoring the positioning of the gripping elements relative to each other.

14. MRK system (100) comprising:
at least one manipulator (110) on which an end effector (111) is arranged;
a control device (120) which is adapted to use the end effector (111) in a first operating mode,
wherein the end effector (111) is operated with reduced power (351; 451; 551) in the first operating mode;
at least one sensor (130; 131) which is arranged to monitor whether a desired object (140) is manipulated when the end effector (111) is inserted in the first operating mode, and
a control element (190) adapted to increase the power with which the end effector (111) is operated in order to use the end effector in a second operating mode when the monitoring has revealed that a desired object (140) is being manipulated.

15. MRK system (100) according to claim 14, wherein the control device (120) is arranged for evaluating of the at least sensor (130; 131).

## Revendications

1. Méthode (200) pour contrôler un système de collaboration homme-robot (MRK) (100), dans laquelle le système MRK (100)
comprend au moins un manipulateur (110) ayant un effecteur terminal (111), et dans lequel la méthode comprend les étapes suivantes :
faire fonctionner (210) l'effecteur terminal (111) dans un premier mode de fonctionnement, dans lequel l'effecteur terminal (111) est actionné à puissance réduite (351 ; 451 ; 551) dans le premier mode de fonctionnement ;
surveiller (230) si un objet souhaité (140) est manipulé lorsque l'effecteur terminal (111) est actionné dans le premier mode de fonctionnement ; et
augmenter (250) la puissance (352 ; 451 ; 551) avec laquelle l'effecteur terminal (111) est actionné afin d'utiliser l'effecteur final dans un second mode de fonctionnement si la surveillance a révélé qu'un objet souhaité (140) est manipulé.

2. Méthode (200) selon la revendication 1, dans lequel la puissance avec laquelle l'effecteur terminal (111) est actionné dans le premier mode de fonctionnement est limitée par une valeur limite supérieure (455 ; 555), dans lequel le respect de la valeur limite supérieure est surveillé et/ou assuré.

3. Méthode (200) selon la revendication 2, dans laquelle la valeur limite supérieure (455 ; 555) définit un courant, une pression, une force ou un couple et est de préférence réglée de telle sorte qu'aucun être humain ne puisse être mis en danger dans le premier mode de fonctionnement.

4. Méthode (200) selon l'une des revendications précédentes, dans laquelle la surveillance (230) pour savoir si un objet souhaité (140) souhaité est manipulé est effectuée en toute sécurité, de préférence par au moins deux capteurs (130 ; 131).

5. Méthode (200) selon l'une des revendications précédentes, dans lequel la surveillance (230) de la manipulation d'un objet souhaité (140) est effectuée au moyen d'au moins un capteur (130) capacitif, inductif, résistif et/ou thermique, qui est de préférence disposé sur l'effecteur terminal (111).

6. Méthode (200) selon l'une des revendications précédentes, la surveillance (230) de la manipulation d'un objet souhaité (140) étant effectué au moyen d'au moins un capteur optique et/ou acoustique (131), le capteur optique et/ou acoustique permettant de détecter si un objet souhaité (140) et/ou quel objet souhaité (140) est manipulé lorsque l'effecteur terminal (111) est inséré.

7. Méthode (200) selon l'une des revendications précédentes, dans lequel la surveillance (230) de la manipulation d'un objet souhaité (140) est effectué au moyen d'au moins deux capteurs (130, 131) différents.

8. Méthode (200) selon l'une des revendications précédentes, dans lequel la surveillance de la manipulation d'un objet souhaité est effectuée en fonction du temps et/ou du lieu dans le premier mode de fonctionnement.

9. Méthode (200) selon l'une des revendications précédentes, dans laquelle l'effecteur final est entraîné par au moins un moteur électrique (440 ; 540), et la valeur limite supérieure définit un courant moteur maximal, le courant moteur du au moins un moteur électrique étant surveillé et comparé à la valeur limite supérieure (455 ; 555), la surveillance étant de préférence effectuée de manière redondante.

10. Méthode (200) selon la revendication 9, dans lequel le courant du moteur est contrôlé au moyen d'au moins un régulateur (450; 550, 560), dans lequel le contrôle n'est de préférence pas effectué de manière sûre.

11. Méthode (200) selon l'une des revendications précédentes, dans lequel l'effecteur final est actionné électriquement, hydrauliquement et/ou pneumatiquement.

12. Méthode (200) selon l'une des revendications précédentes, dans laquelle l'effecteur terminal (111) est une pince qui, dans le premier mode de fonctionnement, saisit un objet souhaité (140) avec une force réduite, et dans lequel
le préhenseur dans le deuxième mode de fonctionnement saisit un objet avec une force accrue si le contrôle a montré qu'un objet souhaité (140) a été saisi.

13. Méthode (200) selon la revendication 12, dans lequel la pince comprend au moins deux éléments de préhension, et dans lequel la surveillance (230) de la manipulation d'un objet souhaité est effectuée en surveillant le positionnement des éléments de préhension l'un par rapport à l'autre.

14. Système MRK (100) comprenant :
au moins un manipulateur (110) sur lequel est disposé un effecteur terminal (111) ;
un dispositif de commande (120) qui est adapté pour utiliser l'effecteur terminal (111) dans un premier mode de fonctionnement, dans lequel l'effecteur terminal (111) est actionné avec une puissance réduite (351 ; 451 ; 551) dans le premier mode de fonctionnement ;
au moins un capteur (130 ; 131) qui est agencé pour surveiller si un objet souhaité (140) est manipulé lorsque l'effecteur terminal (111) est inséré dans le premier mode de fonctionnement, et
un élément de commande (190) adapté pour augmenter la puissance avec laquelle l'effecteur terminal (111) est actionné afin d'utiliser l'effecteur final dans un second mode de fonctionnement lorsque la surveillance a révélé qu'un objet souhaité (140) est manipulé.

15. Système MRK (100) selon la revendication 14, dans lequel le dispositif de commande (120) est agencé pour évaluer au moins le capteur (130 ; 131).
